# EUROPEAN PATENT SPECIFICATION

(11) **EP 3 879 137 B1**
(45) Date of publication and mention of the grant of the patent: **26.07.2023**
(21) Application number: 21162127.1
(22) Date of filing: 11.03.2021
(51) Int. Cl.: F16H 61/421, F16H 61/431, F16H 61/4157

(54) **HYDROSTATIC TRANSMISSION FOR A WORK VEHICLE PROVIDED WITH A HILL-HOLDER SYSTEM**
HYDROSTATISCHES GETRIEBE FÜR EIN ARBEITSFAHRZEUG MIT ROLLSPERRENSYSTEM
TRANSMISSION HYDROSTATIQUE POUR UN VÉHICULE DE TRAVAIL DOTÉ D'UN SYSTÈME ANTI-RECUL

(30) Priority: 12.03.2020 IT 202000005290
(43) Date of publication of application: 15.09.2021
(73) Proprietor: CNH Industrial Italia S.p.A., 10156 Torino (IT)
(72) Inventor: Garramone, Adriano, 73100 Lecce (IT); Gravili, Andrea, 73100 Lecce (IT); Liberti, Stefano, 73100 Lecce (IT); Venezia, Antonio, 10153 Torino (IT)
(74) Representative: CNH Industrial IP Department

(56) References cited:
- DE-A1-102013 202 385
- DE-A1-102013 220 919
- US-A1- 2010 050 620
- US-B1- 6 202 783

## Description

The present invention relates in general to a work vehicle provided with a hydrostatic transmission.

Motorized work vehicles are well known for use in material handling that carry an implement and have a hydraulically operated lifting arm for moving the implement. Examples of such vehicles are tractors and loaders.

A loader is a heavy equipment machine used in construction to move aside on the ground or load materials such as asphalt, demolition debris, dirt, snow, feed, gravel, logs, raw minerals, recycled material, rock, sand, woodchips, etc. into or onto another type of machinery (such as a dump truck, conveyor belt, feed-hopper, or railroad car). There are many types of loader, which, depending on design and application, are called by various names, including bucket loader, front loader, front-end loader, payloader, scoop, shovel, skip loader, wheel loader, or skid-steer.

In particular, compact wheel loaders are compact vehicles that have road wheels and carry a working implement, in particular a bucket attached to a lift arm, which is hydraulically powered. The hydraulic pressure required to operate the working implement is produced by a hydraulic pump driven by an internal combustion engine (hereinafter simply referred to as engine) of the vehicle. The same engine is also used to drive the wheels, which are commonly powered by means of a hydrostatic transmission comprising a hydraulic pump driven by the engine and a hydraulic motor for driving the wheels, the hydraulic pump and the hydraulic motor of the hydrostatic transmission being hydraulically connected to each other by means of a forward line and a backward line of a hydraulic circuit.

More specifically, the present invention relates to a work vehicle of the above-mentioned type, wherein the motor of the hydrostatic transmission is an electronically-controlled variable displacement hydraulic motor, that is a hydraulic motor whose displacement is varied under control of an electronic control unit, while the pump of the hydrostatic transmission is an electronically-controlled variable displacement hydraulic pump, that is a hydraulic pump whose displacement is varied under control of an electronic control unit.

In known work vehicles of the above-mentioned type, there is a need for safe control of the movement of the vehicle, and in particular for keeping the vehicle stand still on sloped terrains and preventing downhill forward or backward movements. An example is shown in DE102013202385A that describes a hill holder function that is based on detection of the rotation angle of the output; another example DE102013220919A discloses a hill holder function in a power split transmission; while US6202783B uses a retarder valve on the open circuit of a further pump and US2010/050620A discloses a method for hydrostatic braking a working machine.

It is therefore an object of the present invention to provide a solution to such problem, effectively preventing the work vehicle from moving downhill on sloped terrains.

This and other objects are fully achieved according to the present invention by virtue of a hydrostatic transmission for a work vehicle as set forth in independent claim 1, as well as by a method for controlling a hydrostatic transmission for a work vehicle as set forth in claim 8.

Advantageous embodiments of the invention are defined in the dependent claims, the subject-matter of which is to be intended as forming an integral part of the following description.

In short, the invention is based on the idea of checking a number of parameters including the position of an accelerator pedal of the vehicle, the speed of the vehicle, the pressure on the forward line of the hydrostatic transmission and the pressure on the backward line of the hydrostatic transmission and performing an hill-holding function programmed in an electronic control unit depending on said parameters.

The features and advantages of the present invention will become more apparent from the following detailed description, given purely by way of non-limiting example with reference to the appended drawings, where:
Figure 1 shows a compact wheel loader as an example of a work vehicle to which the present invention is applicable; and
Figure 2 schematically shows a hydrostatic transmission according to the present invention.

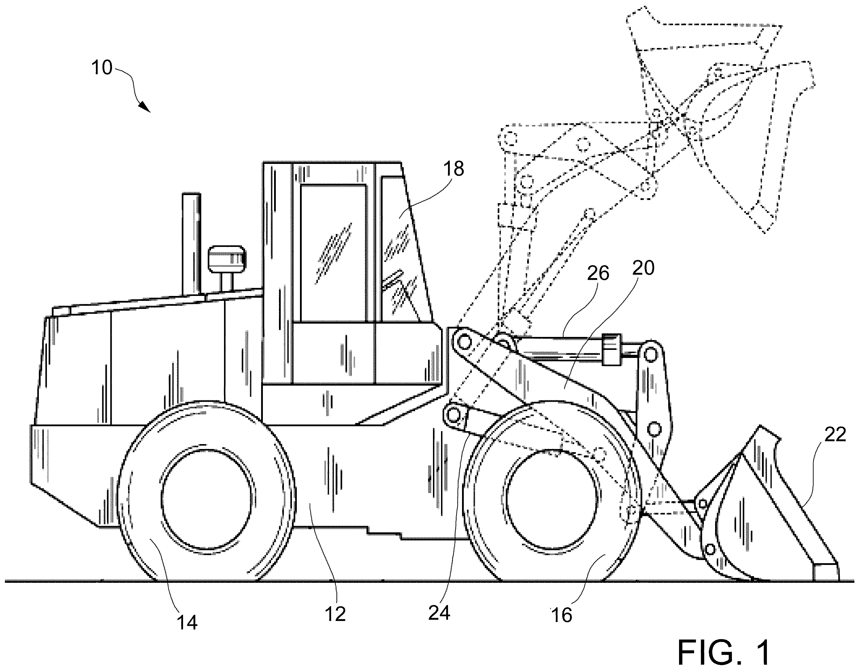

With reference first to Figure 1, a work vehicle is generally indicated at 10. The work vehicle illustrated in Figure 1 is a so-called compact wheel loader. However, the invention is not limited to such kind of work vehicle, but is applicable to any other kind of work vehicle.

In per-se-known manner, the work vehicle 10 comprises a body or frame 12, a pair of front wheels (non-driving wheels) 16, a pair of rear wheels (driving wheels) 14, an operator's cab 18 carried by the body 12, a lift arm 20 attached to the front side of the body 12 and hingedly connected thereto so as to be rotatable about a first axis of rotation directed transversely, a working implement 22, such as for example a bucket, attached to the front ends (free ends) of the lift arm 20 and hingedly connected thereto so as to be rotatable about a second axis of rotation parallel to the first one, a pair of first hydraulic cylinders 24 (only one of which is shown in Figure 1), each of which is interposed between the body 12 and the lift arm 20 and is operable to cause rotary movement of the lift arm 20 relative to the body 12 about the first axis of rotation, and one or two second hydraulic cylinders 26 interposed between the lift arm 20 and the working implement 22 and operable to cause rotary movement of the working implement 22 relative to the lift arm 20 about the second axis of rotation.

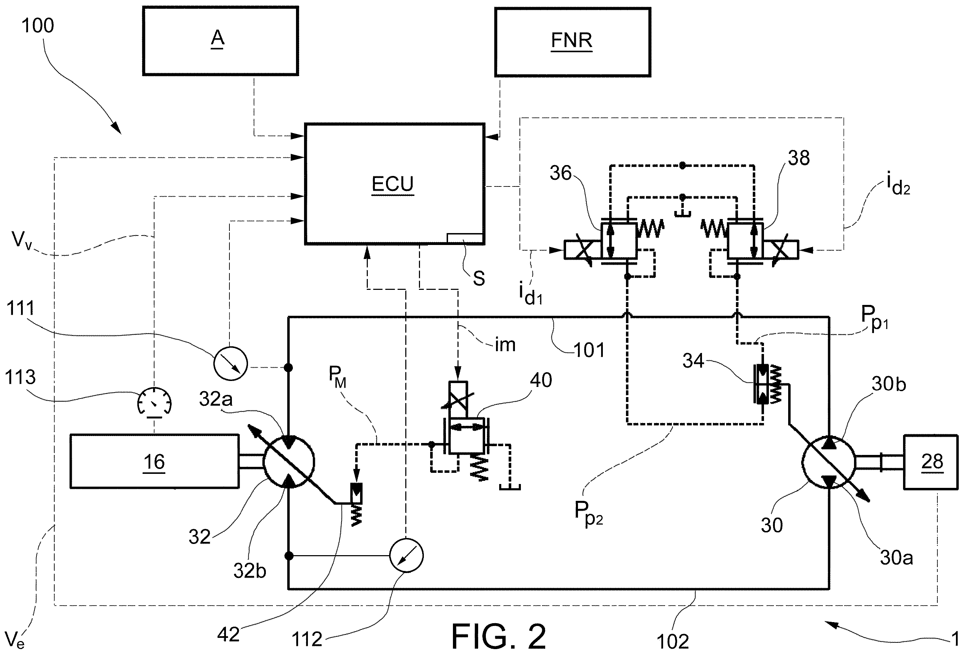

The hydraulic pressure required for the first and second hydraulic cylinders 24 and 26 to operate the lift arm 20 and the working implement 22 is produced by a hydraulic pump driven by an internal combustion engine 28 (hereinafter simply referred to as engine) of the vehicle, the engine 28 being schematically shown in figure 2.

As illustrated in Figure 2, the engine 28 is also used to drive the rear wheels 16 by means of a hydrostatic transmission 100 comprising a hydraulic pump 30 and a hydraulic motor 32 hydraulically connected to each other in such a manner to define a closed hydraulic circuit 1. Therefore, the hydraulic transmission 100 further comprises a forward line 101 arranged to hydraulically connect an outlet 30b of the hydraulic pump 30 to an inlet 32a of the hydraulic motor 32, and a backward line 102 arranged to hydraulically connect an outlet 32b of the hydraulic motor 32 to an inlet 30a of the hydraulic pump 30 in such a manner to define said closed hydraulic circuit 1.

The hydraulic pump 30 is mechanically connected to the engine 28 to be driven by the same, while the hydraulic motor 32 is mechanically connected to the rear wheels 14 to drive the same.

The hydraulic pump 30 is an electronically-controlled variable displacement hydraulic pump, whose displacement is varied by means of a double acting spool 34 under control of an electronic control unit ECU. To this end, the electronic control unit ECU is configured to generate drive currents i_{d1} and i_{d2} for a pair of solenoid valves, namely a backward solenoid valve 36 and a forward solenoid valve 38, and based on the drive currents i_{d1} and i_{d2} generated by the electronic control unit ECU the solenoid valves 36 and 38 generate in turn pilot pressures pₚ₁ and pₚ₂ for the double acting spool 34. Depending on the pilot pressures pₚ₁ and pₚ₂ generated by the solenoid valves 36 and 38, the double acting spool 34 determines the displacement of the hydraulic pump 30, which may take either positive or negative values, corresponding to the forward and rearward direction of the work vehicle 10, respectively.

On the other hand, the hydraulic motor 32 is an electronically-controlled variable displacement hydraulic motor, whose displacement is varied by means of a spool 42, under control of the electronic control unit ECU, which is configured to generate a motor drive current im for a motor solenoid valve 40 that, based on the motor drive current im, generates a pilot pressure pₘ acting on the spool 42 to determine the displacement of the hydraulic motor 32.

The electronic control unit ECU is configured to suitably control the solenoid valves 36, 38 and 40, and therefore to suitably control the displacement of the hydraulic pump 30 and of the hydraulic motor 32. According to the control strategy of the invention, information provided by suitable sensors 111, 112 and 113 is provided to the electronic control unit ECU. Such information relates to:
- the position of an accelerator pedal A of the vehicle 10;
- the speed vᵥ of the vehicle 10 (provided by a speed sensor 113) ;
- the pressure on the forward line 101 of the hydrostatic transmission 100 (provided by a first pressure sensor 111); and
- the pressure on the backward line 102 of the hydrostatic transmission 100 (provided by a second pressure sensor 112).

According to the invention, the speed sensor 113 is preferably a single trace speed sensor.

As shown in figure 2, the first pressure sensor 111 is arranged on the forward line 101 to sense a pressure thereof and send a signal representative of such information to the electronic control unit ECU. Similarly, the second pressure sensor 112 is arranged on the backward line 102 to sense a pressure thereof and send a signal representative of such information to the electronic control unit ECU. Further sensors may be arranged in association with the accelerator pedal A, and optionally a Forward-Neutral-Reverse switch FNR of the vehicle 10 and a brake pedal B of the vehicle, so that information relating to the position of such pedals A, B and switch FNR may be transmitted to the electronic control unit ECU.

According to the invention, the electronic control unit ECU is programmed with a hill-holding function, that is, a function suitable to keep the work vehicle 10 stand still on sloped terrains, and prevent, avoid or contrast any downhill movements caused by the slope of the terrain. The hill-holding function is such that, when the electronic control unit ECU establishes that the accelerator pedal A is released but the vehicle 10 is nevertheless moving downhill, the electronic control unit ECU generates a suitable drive current im to cause maximum displacement of the hydraulic motor 32, and suitable drive currents i_{d1}, i_{d2} for controlling the hydraulic pump 30, and in particular the displacement of the hydraulic pump 30 (and, thus, the driving wheels 16 of the vehicle 10), in such a manner that the downhill movement is contrasted and/or prevented. That is, if the electronic control unit ECU establishes that the accelerator pedal A is released and that the speed vᵥ of the vehicle 10 is nevertheless positive, that is the vehicle is moving forward or backward without a driver commanding it to do so, then the electronic control unit ECU commands the hydraulic pump 30 in a suitable way to prevent and/or contrast such movement. If the vehicle 10 is moving forward, the electronic control unit ECU receives an information representative of a pressure increase from the second pressure sensor 112, and supplies a drive current im to the motor solenoid valve 40 in order to cause the maximum displacement of the hydraulic motor 32 and a drive current i_{d1} to the backward solenoid valve 36 in order to cause a negative increase in the displacement of the hydraulic pump 30, and therefore a reduction in the speed vᵥ of the vehicle 10, until a null value is reached and thus, the vehicle 10 is kept still. If the vehicle 10 is moving backward, the electronic control unit ECU receives an information representative of a pressure increase from the first pressure sensor 111, and supplies a drive current im to the motor solenoid valve 40 in order to cause the maximum displacement of the hydraulic motor 32, and a drive current i_{d2} to the forward solenoid valve 38 in order to cause a positive increase in the displacement of the hydraulic pump 30, and therefore a reduction in the absolute value of the speed vᵥ of the vehicle 10, until a null value is reached and thus, the vehicle 10 is kept still. Therefore, according to the control logic described above, the electronic control unit ECU is programmed to control the hydraulic transmission 100 in such a manner that any undesired downhill movement is contrasted and/or prevented.

Preferably, the electronic control unit ECU is further configured to control the operation of the hydrostatic transmission 100 depending on the position of a Forward-Neutral-Reverse switch (FNR) of the vehicle 10, on the position of the brake pedal B, and/or on the engine speed vₑ (i.e. the number of revolutions per minute of the engine 28)

The electronic control unit ECU is further programmed to disable the hill-holding function as soon as the accelerator pedal A is pressed, allowing the operator to control the speed vᵥ of the vehicle 10 by simply pressing such pedal and not having to specifically control the hill-holding function.

Nevertheless, according to a further embodiment of the invention, the electronic control unit ECU is further configured to activate or deactivate said hill-holding function depending on the position of a controllable switch S adapted to enable and disable said function.

By virtue of the present invention, therefore, it is possible to control a hydrostatic transmission, and a work vehicle, in order to prevent undesired downhill movements on sloped terrains. This is obtained by means of a very simple integrated system, provided with sensors on the closed hydraulic circuit, and particularly with a speed sensor and a first and a second pressure sensors.

Naturally, the principle of the invention remaining unchanged, the embodiments and the constructional details may vary widely from those described and illustrated purely by way of non-limiting example, without thereby departing from the scope of the invention as defined in the appended claims.

## Claims

1. Hydrostatic transmission (100) for a work vehicle (10), the hydrostatic transmission (100) comprising
a hydraulic pump (30), a hydraulic motor (32), a forward line (101) arranged to hydraulically connect an outlet (30b) of the hydraulic pump (30) to an inlet (32a) of the hydraulic motor (32), and a backward line (102) arranged to hydraulically connect an outlet (32b) of the hydraulic motor (32) to an inlet (30a) of the hydraulic pump (30) in such a manner to define a closed hydraulic circuit (1), wherein the hydraulic pump (30) is arranged to be mechanically coupled to an internal combustion engine (28) of the vehicle (10), and the hydraulic motor (32) is arranged to be mechanically connected to driving wheels (16) of the vehicle (10),
wherein the hydraulic pump (30) is an electronically-controlled variable displacement hydraulic pump, and the hydraulic motor (32) is an electronically-controlled variable displacement hydraulic motor,
wherein the hydrostatic transmission further comprises an electronic control unit (ECU) for controlling the operation of the hydrostatic transmission (100), the electronic control unit (ECU) being configured to generate drive currents (i_{d1}, i_{d2}, im) for adjusting the displacement of the hydraulic pump (30) and of the hydraulic motor (32) based on information, provided to the electronic control unit (ECU), relating to:
- the position of an accelerator pedal (A) of the vehicle (10),
- the speed (vᵥ) of the vehicle (10) provided by a speed sensor (113); the hydrostatic transmission is **characterized in that** said information provided to the electronic control unit (ECU) further comprises:
- the pressure on the forward line (101) of the hydrostatic transmission (100) provided by a first pressure sensor (111), and
- the pressure on the backward line (102) of the hydrostatic transmission (100) provided by a second pressure sensor (112);
wherein
the electronic control unit (ECU) is programmed with a hill-holding function such that when the electronic control unit (ECU) establishes that the accelerator pedal (A) is released, but the vehicle (10) is nevertheless moving downhill forward or backward based on the information received from said speed sensor (113) and first and second pressure sensors (111, 112), the electronic control unit (ECU) generates suitable drive currents (i_{d1}, i_{d2}, im) for controlling the hydraulic pump (30) and the hydraulic motor (32) and, thus, the driving wheels (16) of the vehicle (10), in such a manner that the downhill movement is contrasted and/or prevented.

2. Hydrostatic transmission according to claim 1, wherein the electronic control unit (ECU) is further configured to generate drive currents (i_{d1}, i_{d2}) for adjusting the displacement of the hydraulic pump (30) based on information relating to the position of a brake pedal (B) of the vehicle (10).

3. Hydrostatic transmission according to claim 1 or to claim 2, wherein the electronic control unit (ECU) is further configured to activate or deactivate said hill-holding function depending on the position of a controllable switch (S) adapted to enable and disable said hill-holding function.

4. Hydrostatic transmission according to any one of the preceding claims, wherein the electronic control unit (ECU) is further configured to control the operation of the hydrostatic transmission (100) depending on the position of a FNR (Forward-Neutral-Reverse) switch (FNR) of the vehicle (10).

5. Hydrostatic transmission according to any one of the preceding claims, further comprising a displacement adjustment device (34) associated to the hydraulic pump (30) for adjusting the displacement thereof, and a pair of solenoid valves (36, 38) arranged to receive the drive currents (i_{d1}, i_{d2}) generated by the electronic control unit (ECU) and to generate, depending on said drive currents (i_{d1}, i_{d2}), pilot pressures for controlling the displacement adjustment device (34).

6. Hydrostatic transmission according to claim 5, further comprising a motor displacement adjustment device (42) associated to the hydraulic motor (32) for adjusting the displacement thereof, and a motor solenoid valve (40) arranged to receive a motor drive current (im) generated by the electronic control unit (ECU) and to generate, depending on said motor drive current (im), a pilot pressure for controlling the displacement of the motor displacement adjustment device (42).

7. Work vehicle (10), in particular compact wheel loader, comprising driving wheels (16), a hydrostatic transmission (100) according to any one of the preceding claims, and an internal combustion engine (28) for driving said driving wheels (16) through the hydrostatic transmission (100), wherein said driving wheels (16) are mechanically coupled to the hydraulic motor (32) of the hydrostatic transmission, and wherein the internal combustion engine (28) is mechanically coupled to the hydraulic pump (30) of the hydrostatic transmission (100).

8. Method for controlling a hydrostatic transmission (100) according to any one of claims from 1 to 6, comprising the steps of:
a) establishing whether the accelerator pedal (A) is released;
b) establishing whether the vehicle (10) is moving downhill forward or backward;
c) when both the conditions of step a) and b) are positively verified simultaneously, generating, by means of the electronic control unit (ECU), suitable drive currents (i_{d1}, i_{d2}, im) for controlling the hydraulic pump (30) and the hydraulic motor (32) and, thus, the driving wheels (16) of the vehicle (10), in such a manner that the downhill movement is contrasted and/or prevented.

9. Method according to claim 8, wherein said step b) is carried out by the electronic control unit (ECU) processing information relating to:
- the position of the accelerator pedal (A) of the vehicle (10),
- the speed (vᵥ) of the vehicle (10) provided by the speed sensor (113),
- the pressure on the forward line (101) of the hydrostatic transmission (100) provided by the first pressure sensor (111), and
- the pressure on the backward line (102) of the hydrostatic transmission (100) provided by the second pressure sensor (112) .

10. Method according to claim 8 or to claim 9, wherein during said step c) the displacement of the hydraulic pump (30) is varied by generating suitable drive currents (i_{d1}, i_{d2}) for a pair of solenoid valves (36, 38) arranged to generate, depending on said drive currents (i_{d1}, i_{d2}), pilot pressures for controlling a displacement adjustment device (34) associated to the hydraulic pump (30).

11. Method according to claim 10, wherein during said step c) the displacement of the hydraulic motor (32) is varied by generating a suitable motor drive current (im) for a motor solenoid valve (40) arranged to generate, depending on said motor drive current (im), a pilot pressure for controlling a motor displacement adjustment device (42) associated to the hydraulic motor (32).

## Patentansprüche

1. Hydrostatisches Getriebe (100) für ein Arbeitsfahrzeug (10), wobei das hydrostatische Getriebe (100) aufweist:
eine Hydraulikpumpe (30), einen Hydraulikmotor (32), eine Einspeiseleitung (101), die dazu eingerichtet ist, einen Auslass (30b) der Hydraulikpumpe (30) mit einem Einlass (32a) des Hydraulikmotors (32) hydraulisch zu verbinden, und eine Ausspeiseleitung (102), die dazu eingerichtet ist, einen Auslass (32b) des Hydraulikmotors (32) mit einem Einlass (30a) der Hydraulikpumpe (30) in einer solchen Weise hydraulisch zu verbinden, dass ein geschlossener Hydraulikkreislauf (1) gebildet wird,
wobei die Hydraulikpumpe (30) dazu eingerichtet ist, mit einem Verbrennungsmotor (28) des Fahrzeugs (10) mechanisch gekoppelt zu sein, und der Hydraulikmotor (32) dazu eingerichtet ist, mit den Antriebsrädern (16) des Fahrzeugs (10) mechanisch gekoppelt zu sein,
wobei die Hydraulikpumpe (30) eine elektrisch steuerbare Verstell-Hydraulikpumpe ist, und der Hydraulikmotor (32) ein elektrisch steuerbarer Verstell-Hydraulikmotor ist,
wobei das hydrostatische Getriebe weiterhin eine elektronische Steuereinheit (ECU) zur Steuerung des Betriebs des hydrostatischen Getriebes (100) aufweist, wobei die elektronische Steuereinheit (ECU) dazu eingerichtet ist, Antriebsströme (i_{d1}, i_{d2}, iₘ) zum Einstellen der Verstellung der Hydraulikpumpe (30) und des Hydraulikmotors (32) auf Basis von Informationen zu erzeugen, die der elektronischen Steuereinheit (ECU) bereitgestellt werden, wobei sich die Informationen beziehen auf:
- die Position eines Gaspedals (A) des Fahrzeugs (10),
- die Geschwindigkeit (vᵥ) des Fahrzeugs (10), die von einem Geschwindigkeitssensor (113) bereitgestellt wird;
wobei das hydrostatische Getriebe **dadurch gekennzeichnet ist, dass**
die Informationen, die der elektronischen Steuereinheit (ECU) bereitgestellt werden, weiterhin umfassen:
- den Druck an der Einspeiseleitung (101) des hydrostatischen Getriebes (100), der von einem ersten Drucksensor (111) bereitgestellt wird, und
- den Druck an der Ausspeiseleitung (102) des hydrostatischen Getriebes (100), der von einem zweiten Drucksensor (112) bereitgestellt wird;
wobei die elektronische Steuereinheit (ECU) mit einer Roll-Sperrfunktion derart programmiert ist, dass, wenn die elektronische Steuereinheit (ECU) auf Basis der Informationen, die sie von dem Geschwindigkeitssensor (113) und dem ersten und zweiten Sensor (111, 112) erhalten hat, feststellt, dass das Gaspedal (A) losgelassen ist, sich das Fahrzeug (10) jedoch dennoch vorwärts oder rückwärts bergab bewegt, die elektronische Steuereinheit (ECU) entsprechende Antriebsströme (i_{d1}, i_{d2}, im) zur Steuerung der Hydraulikpumpe (30) und des Hydraulikmotors (32) und damit der Antriebsräder (16) des Fahrzeugs (10) in einer solchen Weise erzeugt, dass der Bewegung bergab entgegengewirkt und/oder dieselbe verhindert wird.

2. Hydrostatisches Getriebe nach Anspruch 1, wobei die elektronische Steuereinheit (ECU) weiterhin dazu eingerichtet ist, Antriebsströme (i_{d1}, i_{d2}) zum Einstellen der Verstellung der Hydraulikpumpe (30) auf Basis von Informationen bezüglich der Position eines Bremspedals (B) des Fahrzeugs (10) zu erzeugen.

3. Hydrostatisches Getriebe nach Anspruch 1 oder nach Anspruch 2, wobei die elektronische Steuereinheit (ECU) weiterhin dazu eingerichtet ist, die Roll-Sperrfunktion abhängig von der Position eines steuerbaren Schalters (S), der dazu eingerichtet ist, die Roll-Sperrfunktion ein- und auszuschalten, zu aktivieren oder zu deaktivieren.

4. Hydrostatisches Getriebe nach einem der vorhergehenden Ansprüche, wobei die elektronische Steuereinheit (ECU) weiterhin dazu eingerichtet ist, den Betrieb des hydrostatischen Getriebes (100) abhängig von der Position eines FNR(Vorwärts-Neutral-Rückwärts)-Schalters (FNR) des Fahrzeugs (10) zu steuern.

5. Hydrostatisches Getriebe nach einem der vorhergehenden Ansprüche, weiterhin aufweisend eine Verstell-Einstellvorrichtung (34), die der Hydraulikpumpe (30) zugeordnet ist, um die Verstellung derselben einzustellen, und ein Paar von Magnetventilen (36, 38), die dazu eingerichtet sind, die Antriebsströme (i_{d1}, i_{d2}), die von der elektronischen Steuereinheit (ECU) erzeugt werden, zu empfangen und, abhängig von den Steuerströmen (i_{d1}, i_{d2}), Steuerdrücke zur Steuerung der Verstell-Einstellvorrichtung (34) zu erzeugen.

6. Hydrostatisches Getriebe nach Anspruch 5, weiterhin aufweisend eine Motor-Verstell-Einstellvorrichtung (42), die dem Hydraulikmotor (32) zugeordnet ist, um die Verstellung desselben einzustellen, und ein Motor-Magnetventil (40), das dazu eingerichtet ist, einen Motor-Antriebsstrom (im), der von der elektronischen Steuereinheit (ECU) erzeugt wird, zu empfangen und, abhängig von dem Motor-Antriebsstrom (im), einen Steuerdruck zur Steuerung der Verstellung der Motor-Verstell-Einstellvorrichtung (42) zu erzeugen.

7. Arbeitsfahrzeug (10), insbesondere Kompaktradlader, mit Antriebsrädern (16), einem hydrostatischen Getriebe (100) nach einem der vorhergehenden Ansprüche, und einem Verbrennungsmotor (28) zum Antreiben der Antriebsräder (16) durch das hydrostatische Getriebe (100), wobei die Antriebsräder (16) mit dem Hydraulikmotor (32) des hydrostatischen Getriebes mechanisch gekoppelt sind, und wobei der Verbrennungsmotor (28) mit der Hydraulikpumpe (30) des hydrostatischen Getriebes (100) mechanisch gekoppelt ist.

8. Verfahren zur Steuerung eines hydrostatischen Getriebes (100) nach einem der Ansprüche 1 bis 6, mit den folgenden Schritten:
a) Feststellen, ob das Gaspedal (A) losgelassen ist;
b) Feststellen, ob sich das Fahrzeug (10) vorwärts oder rückwärts bergab bewegt;
c) wenn beide Bedingungen in den Schritten a) und b) gleichzeitig bestätigt werden, Erzeugen von entsprechenden Antriebsströmen (i_{d1}, i_{d2}, im) zur Steuerung der Hydraulikpumpe (30) und des Hydraulikmotors (32) und damit der Antriebsräder (16) des Fahrzeugs (10) mittels der elektronischen Steuereinheit (ECU) in einer solchen Weise, dass der Bergab-Bewegung entgegengewirkt und/oder dieselbe verhindert wird.

9. Verfahren nach Anspruch 8, wobei der Schritt b) durch die elektronische Steuereinheit (ECU) ausgeführt wird, die Informationen verarbeitet, die sich beziehen auf:
- die Position des Gaspedals (A) des Fahrzeugs (10),
- die Geschwindigkeit (vᵥ) des Fahrzeugs (10), die von dem Geschwindigkeitssensor (113) bereitgestellt wird,
- den Druck an der Einspeiseleitung (101) des hydrostatischen Getriebes (100), der von dem ersten Drucksensor (111) bereitgestellt wird, und
- den Druck an der Ausspeiseleitung (102) des hydrostatischen Getriebes (100), der von dem zweiten Drucksensor (112) bereitgestellt wird.

10. Verfahren nach Anspruch 8 oder nach Anspruch 9, wobei während des Schritts c) die Verstellung der Hydraulikpumpe (30) verändert wird, indem entsprechende Antriebsströme (i_{d1}, i_{d2}) für ein Paar von Magnetventilen (36, 38) erzeugt werden, die dazu eingerichtet sind, abhängig von den Antriebsströmen (i_{d1}, i_{d2}) Steuerdrücke zur Steuerung einer Verstell-Einstellvorrichtung (34), die der Hydraulikpumpe (30) zugeordnet ist, zu erzeugen.

11. Verfahren nach Anspruch 10, wobei während des Schritts c) die Verstellung des Hydraulikmotors (32) verändert wird, indem ein entsprechender Antriebsstrom (im) für ein Motor-Magnetventil (40) erzeugt wird, das dazu eingerichtet ist, abhängig von dem Antriebsstrom (im) einen Steuerdruck zur Steuerung einer Motor-Verstell-Einstellvorrichtung (42), die dem Hydraulikmotor (32) zugeordnet ist, zu erzeugen.

## Revendications

1. Transmission hydrostatique(100) pour un véhicule de travail (10), la transmission hydrostatique (100) comprenant :
une pompe hydraulique (30), un moteur hydraulique (32), une ligne avant (101) agencée pour relier hydrauliquement une sortie (30b) de la pompe hydraulique (30) à une entrée (32a) du moteur hydraulique (32), et une ligne de fuite (102) agencée pour relier hydrauliquement une sortie (32b) du moteur hydraulique (32) à une entrée (30a) de la pompe hydraulique (30) de manière à définir un circuit hydraulique fermé (1),
dans laquelle la pompe hydraulique (30) est agencée pour être couplée mécaniquement à un moteur à combustion interne (28) du véhicule (10), et le moteur hydraulique (32) est agencé pour être relié mécaniquement aux roues motrices (16) du véhicule (10), dans laquelle la pompe hydraulique (30) est une pompe hydraulique à cylindrée variable à commande électronique, et le moteur hydraulique (32) est un moteur hydraulique à cylindrée variable à commande électronique,
dans laquelle la transmission hydrostatique comprend en outre une unité de commande électronique (ECU) pour commander le fonctionnement de la transmission hydrostatique (100), l'unité de commande électronique (ECU) étant configurée pour générer des courants d'entraînement (i_{dl}, i_{d2}, iₘ) pour ajuster le déplacement de la pompe hydraulique (30) et du moteur hydraulique (32) sur la base d'informations, fournies à l'unité de commande électronique (ECU), se rapportant à :
- la position d'une pédale d'accélérateur (A) du véhicule (10),
- la vitesse (vᵥ) du véhicule (10) fournie par un capteur de vitesse (113);
la transmission hydrostatique est **caractérisée en ce que** lesdites informations fournies à l'unité de commande électronique (ECU) comprennent en outre :
- la pression sur la ligne avant (101) de la transmission hydrostatique (100) fournie par un premier capteur de pression (111), et
- la pression sur la ligne de fuite (102) de la transmission hydrostatique (100) fournie par un second capteur de pression (112) ;
dans laquelle l'unité de commande électronique (ECU) est programmée avec une fonction de maintien en côte de sorte que lorsque l'unité de commande électronique (ECU) établit que la pédale d'accélérateur (A) est relâchée, mais que le véhicule (10) se déplace néanmoins en descente vers l'avant ou vers l'arrière sur la base des informations reçues dudit capteur de vitesse (113) et des premier et second capteurs de pression (111, 112), l'unité de commande électronique (ECU) génère des courants d'entraînement adéquats (i_{d1}, i_{d2}, iₘ) pour commander la pompe hydraulique (30) et le moteur hydraulique (32) et, par conséquent, les roues motrices (16) du véhicule (10), de telle sorte que le mouvement de descente soit contrasté et/ou empêché.

2. Transmission hydrostatique selon la revendication 1, dans laquelle l'unité de commande électronique (ECU) est en outre configurée pour générer des courants d'entraînement (i_{d1}, i_{d2}) afin d'ajuster le déplacement de la pompe hydraulique (30) sur la base d'informations relatives à la position d'une pédale de frein (B) du véhicule (10).

3. Transmission hydrostatique selon la revendication 1 ou la revendication 2, dans laquelle l'unité de commande électronique (ECU) est en outre configurée pour activer ou désactiver ladite fonction de maintien en côte en fonction de la position d'un commutateur contrôlable (S) adapté pour activer et désactiver ladite fonction de maintien en côte.

4. Transmission hydrostatique selon l'une quelconque des revendications précédentes, dans laquelle l'unité de commande électronique (ECU) est en outre configurée pour commander le fonctionnement de la transmission hydrostatique (100) en fonction de la position d'un commutateur FNR (marche avant-point mort-marche arrière) du véhicule (10).

5. Transmission hydrostatique selon l'une quelconque des revendications précédentes, comprenant en outre un dispositif régulateur de mouvement (34) associé à la pompe hydraulique (30) pour ajuster le mouvement de celle-ci, et une paire d'électrovannes (36, 38) agencées pour recevoir les courants d'entraînement (i_{d1}, i_{d2}) générés par l'unité de commande électronique (ECU) et pour générer, en fonction desdits courants d'entraînement (i_{d1}, i_{d2}), des pressions pilotes pour commander le dispositif régulateur de mouvement (34).

6. Transmission hydrostatique selon la revendication 5, comprenant en outre un dispositif régulateur de mouvement du moteur (42) associé au moteur hydraulique (32) pour ajuster le mouvement de celui-ci, et une électrovanne de moteur (40) agencée pour recevoir un courant d'entraînement du moteur (iₘ) généré par l'unité de commande électronique (ECU) et pour générer, en fonction dudit courant d'entraînement du moteur (iₘ), une pression pilote pour commander le mouvement du dispositif régulateur de mouvement du moteur (42).

7. Véhicule de travail (10), en particulier un chargeur sur pneus compact, comprenant des roues motrices (16), une transmission hydrostatique (100) selon l'une quelconque des revendications précédentes, et un moteur à combustion interne (28) pour entraîner lesdites roues motrices (16) par le biais de la transmission hydrostatique (100), dans lequel lesdites roues motrices (16) sont reliées mécaniquement au moteur hydraulique (32) de la transmission hydrostatique, et dans lequel le moteur à combustion interne (28) est relié mécaniquement à la pompe hydraulique(30) de la transmission hydrostatique (100).

8. Procédé pour commander une transmission hydrostatique (100) selon l'une quelconque des revendications 1 à 6, comprenant les étapes consistant à :
a) déterminer si la pédale d'accélérateur (A) est relâchée ;
b) déterminer si le véhicule (10) se déplace en descente vers l'avant ou vers l'arrière;
c) lorsque les conditions des étapes a) et b) sont vérifiées positivement simultanément, générer, au moyen de l'unité de commande électronique (ECU), des courants d'entraînement appropriés (i_{d1}, i_{d2}, iₘ) pour commander la pompe hydraulique (30) et le moteur hydraulique (32) et, par conséquent, les roues motrices (16) du véhicule (10), de telle sorte que le mouvement de descente soit contrasté et/ou empêché.

9. Procédé selon la revendication 8, dans lequel ladite étape b) est effectuée par l'unité de contrôle électronique (ECU) qui traite les informations relatives à :
- la position de la pédale d'accélérateur (A) du véhicule (10),
- la vitesse (vᵥ) du véhicule (10) fournie par le capteur de vitesse (113),
- la pression sur la ligne avant (101) de la transmission hydrostatique (100) fournie par le premier capteur de pression (111), et
- la pression sur la ligne de fuite (102) de la transmission hydrostatique (100) fournie par le second capteur de pression (112).

10. Procédé selon la revendication 8 ou la revendication 9, dans lequel lors de ladite étape c) le déplacement de la pompe hydraulique (30) varie en générant des courants d'entraînement appropriés (i_{dI}, i_{d2}) pour une paire d'électrovannes (36, 38) agencées pour générer, en fonction desdits courants d'entraînement (i_{dI}, i_{d2}), des pressions pilotes pour commander un dispositif d'ajustement de mouvement(34) associé à la pompe hydraulique (30).

11. Procédé selon la revendication 10, dans lequel lors de ladite étape c) le déplacement du moteur hydraulique (32) varie en générant un courant d'entraînement approprié (iₘ) pour une électrovanne de moteur (40) agencée pour générer, en fonction dudit courant d'entraînement du moteur (iₘ), une pression pilote pour commander un dispositif d'ajustement de mouvement du moteur (42) associé au moteur hydraulique (32).
